# EUROPEAN PATENT APPLICATION

(11) **EP 2 034 003 A1**
(43) Date of publication of application: **11.03.2009**
(21) Application number: 07115971.9
(22) Date of filing: 07.09.2007
(51) Int. Cl.: C10J 3/62, C10J 3/64, C10J 3/82, C10J 3/84

(54) **Process and apparatus for producing synthesis gas from waste**

(71) Applicant: ReSeTec Patents Geneva S.A. i.o., 12 Geneva 11 (CH)
(72) Inventor: Bronsgeest, Cock G., 3054 VG Rotterdam (NL); Schmidt, Hans, 3054 VG Rotterdam (NL); de Jongh, Henk, 3054 VG Rotterdam (NL)
(74) Representative: Hatzmann, Martin

(57) **Abstract**

The invention is directed to a process and an apparatus for converting waste into synthesis gas, wherein heavy metals are concentrated to a large extent, so that these may be reused as a source by heavy metal processing industries. In accordance with the invention a process is provided which comprises converting hydrocarbons by pyrolysis at least partly into synthesis gas, feeding said pyrolysis gas to a booster to avoid at least in part condensation, feeding the booster product gas to a converter wherein further hydrocarbons are converted to synthesis gas and subjecting the thereby obtained gas to quenching by contacting it with water at a temperature that is sufficiently high to convert at least part of said water into hydrogen and oxygen. The solid stream of pyrolysis residue is fed to a smelter operated to vaporize at least a part of the heavy metals and to obtain a slag.

## Description

The invention is directed to a process and apparatus for processing streams comprising hydrocarbons, such as domestic or industrial waste. The process of the invention can advantageously be employed to process waste streams that are contaminated with heavy metals, such as sludge.

The demand for efficient processes for the conversion of waste into useful energy is evolving rapidly in view of increasing demands for more efficient energy usage. Also increasing environmental awareness has lead to demands for more responsible disposal of hazardous materials, such as heavy metals.

The present invention is directed to processes for converting hydrocarbon streams into gaseous product streams comprising synthesis gas while also concentrating metal waste streams, in particular heavy metal containing waste, such as waste containing lead, cadmium, zinc, tin and combinations thereof.

In accordance with the present invention there is provided a process for producing synthesis gas from a feed comprising hydrocarbons. The hydrocarbons can be of any suitable source, such as domestic or industrial waste, but also organic feeds such as wood or crops can be used. The process of the invention comprises converting the hydrocarbons by pyrolysis at least partly into synthesis gas, which synthesis gas is quenched by contacting it with water at a temperature that is sufficiently high to convert at least part of said water into hydrogen and oxygen, thus producing synthesis gas enriched in hydrogen and oxygen.

It follows that the temperature at which the quenching takes place is very high. Preferably the quenching is done by providing the synthesis gas at a temperature prior to quenching of at least 1300 °C.

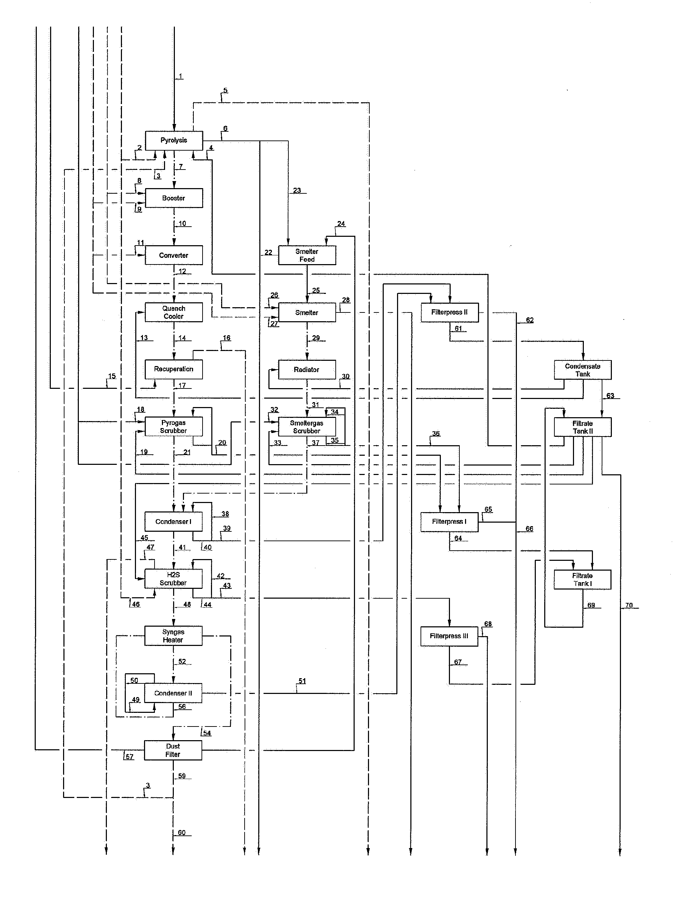

The present invention is suitably illustrated with reference to Figure 1, which shows a schematic representation of a process in accordance with the present invention. It is to be noted that numerous modifications on the process of Figure 1 are possible without departing from the spirit of the present invention.

In the process depicted in Figure 1, solid and/or liquid feed (1) comprising hydrocarbons, *e.g.* a municipal or industrial waste stream, is fed to a pyrolysis reactor. A rotating oven, such as the one described in EP-A-0 653 478 may be used as pyrolysis reactor. At the end of the pyrolysis step, water (for instance and advantageously in the form of filtrate (4) from elsewhere in the process) may be added for cooling the pyrolysis residues (pyrolytic coke). Pure oxygen (O₂) or oxygen containing gas, such as air (2), and a fuel, e.g. synthesis gas (3), are combined and allowed to react to provide the heat for the pyrolysis. Instead of, or supplementary to synthesis gas, other combustibles, such as natural gas may be used. In the pyrolysis step any suitable burner can be used. It is advantageous to use an Oxy-Fuel Burner, wherein methane is combusted using pure oxygen. The temperature in this step is sufficiently high to allow for at least pyrolysis of at least part of the hydrocarbons fed to the reactor. Preferably the temperature is at least about 450 °C, more preferably at least 480°C, even more preferably 500-600 °C. The gas (7) obtained in this step is referred to as a pyrolysis gas. It comprises hydrocarbons, CO and/or H₂, and usually also CO₂ and/or H₂O, and commonly also sulfur compounds, such as sulfur oxides. In this stage the pyrolysis gas also contains (gaseous) hydrocarbons. Also in this step a solid stream of pyrolysis residue (pyrocoke) (6) is obtained. Flue gas stream (5) may be vented. The separation of hot flue gas and pyrocoke is carried out in conventional ways, e.g. when employing the rotating oven of EP-A-0 653 478 the gas flows around the rotating oven, while the pyrocoke is conveyed through the inside of the oven.

Some of the hydrocarbons in pyrolysis gas (7) have a tendency to condensate. For this reason the gas is preferably next fed to a booster, before it is fed to the converter. In the booster the synthesis gas is heated to a temperature that is sufficiently high to avoid at least partly, but preferably completely, condensation of compounds from the gaseous stream. Preferably the temperature in the booster is at least 700 °C, more preferably at least 750 °C, even more preferably 800-840 °C, e.g. around 820 °C. The heating can be carried out in the same way as in the previous step, *viz*. using a combustible gas (8), such as synthesis gas and/or natural gas, in combination with oxygen or an oxygen containing gas such as air (9).

In the converter the synthesis gas (10) coming from the booster is contacted with oxygen or an oxygen containing gas stream (11), such as air to convert remaining hydrocarbons to synthesis gas. Preferably all, or substantially all (*e.g.* more than 99 wt.%) remaining hydrocarbons are converted in this step. This step may again be carried out using a burner, e.g. of the type described hereinabove.

The gas exiting the converter (12), is contacted with water (13) at a relatively high temperature. This can be done in a quencher. This temperature is high enough to cause decomposition of water into H₂ and O₂. This process is called thermal dissociation. Preferably the temperature in the quencher prior to quenching is at least about 1200 °C, more preferably 1250-2000 °C, even more preferably about 1300-1600 °C, e.g. about 1350 °C. In the embodiment of Figure 1, the water used is water from a condensation tank, but other water sources can be used as well.

The gas (14) coming from the quench cooler has a temperature of around 1200 °C. The heat from gas stream (14) may be recovered in a recuperation section, e.g. using boiler water (15), which is converted to steam (16) for further use elsewhere.

The gas (17) coming from the recuperator is subjected to further cleaning steps to remove sulfur compounds, such as H₂S and dust therefrom.

The stream of pyrolysis residue (6) that is obtained in the pyrolysis step may contain a considerable amount of heavy metals, in particular lead, cadmium, zinc, tin and antimony. It is a further object of the present invention to concentrate these heavy metals to a large extent, and in particular to such an extent that a product results that has a positive market value. This can be accomplished by carrying out the following steps.

The solid pyrolysis residue (6) is fed to a smelter, to which may also be added other compounds, such as loaded adsorbent, which can be obtained from a different location in the process. Suitable adsorbents are for instance adsorbent based on limestone, activated carbon, or mixtures thereof.

Carbon or carbon rich material may be fed to the smelter to adjust the reducibility of the gaseous phase and to obtain a synthetic gas with a desired caloric value.. Preferably the carbon rich material is in the form of sludge, even more preferably sludge that is contaminated with heavy metals. Also flowing agents, such as MgO and CaO can be added at this stage.

In the smelter the solids are heated to a temperature that is sufficiently high to melt the slag. Preferably the temperature is at least 1400 °C, more preferably 1450-2100 °C, typically around 2000 °C. It was found that the majority of the heavy metals present in the smelter is present in the gas phase, depending on their composition and temperature, whereas other metals are present in the liquid slag. This means that the smelter can be used as a separation device for separating the heavy metals from the other solid residues.

The gas (29) leaving the smelter can be fed to a radiator, where again it is quenched with water, for instance filtrate (30). The same principle as applied in the quench cooler explained herein above is carried through in the radiator, because the temperature is still sufficiently high (1500 °C or more). As a result the H₂ and O₂ content of the gas is raised, which adds considerably to its caloric value.

Next the gas (31) coming from the radiator is fed to a scrubber to remove evaporated heavy metals, which are condensed by cooling down the gas, after which they can be separated together with other solid matter, such as dust. After filtering, the solid material can be collected as streams (68) and (66) having a high concentration of heavy metals. The gas (37) leaving the scrubber may then be combined with the pyrolysis gas (21), after which it may be subjected to a final cleaning step.

The synthesis gas thus produced can be employed for various applications, including generation of heat and/or work (electricity) and/or for as starting material for chemical synthesis.

The streams rich in heavy metal (68) and (66), which are produced in accordance with the present invention have a concentration of these heavy metals make them suitable for use as metal ore in the metal industry, rather than as chemical waste, which is an important advantage of the present invention.

## Claims

1. Process for producing synthesis gas from a feed comprising hydrocarbons, which process comprises converting said hydrocarbons by pyrolysis at least partly into synthesis gas, which synthesis gas is quenched by contacting it with water at a temperature that is sufficiently high to convert at least part of said water into hydrogen and oxygen, thus producing synthesis gas enriched in hydrogen and oxygen.

2. Process according to claim 1, wherein said synthesis gas prior to quenching has a temperature of at least 1300 °C.

3. Process according to any of the previous claims, comprising the steps of:
- feeding said stream of hydrocarbons to a pyrolysis reactor, which is operated at a temperature sufficient to obtain pyrolysis of at least part of said hydrocarbons, thus producing a pyrolysis gas;
- feeding said pyrolysis gas to a booster, which is operated at a temperature to avoid at least in part condensation of one or more components of said pyrolysis gas;
- feeding the product gas of the booster step to a converter step, wherein further hydrocarbons are converted to synthesis gas; and
- subjecting the product gas of the converter step to said quenching.

4. Process according to claim 3, wherein said pyrolysis reactor is operated at a temperature of at least about 450 °C

5. Process according to claim 3 or 4, wherein said pyrolysis reactor is operated at a temperature of at least about 480 °C.

6. Process according to claim 3 or 4, wherein said pyrolysis reactor is operated at a temperature of about 500-600 °C.

7. Process according to any of the previous claims, wherein a solid stream of pyrolysis residue is obtained, which is fed to a process comprising a smelter, which is operated at a temperature that is sufficient to vaporize at least part of the heavy metals present in the feed of said smelter and sufficient to obtain a liquid slag.

8. Process according to the previous claim, wherein a carbon rich material is fed to said smelter, preferably in the form of sludge, more preferably sludge that is contaminated with heavy metal.

9. Apparatus for processing waste, comprising a pyrolysis reactor having a gas exit and a solid exit, wherein said gas exit is connected to one or more pieces of equipment for increasing the temperature of the gas and increasing the amount of synthesis gas, while decreasing the amount of hydrocarbon, the exit of which equipment is connected to a quencher, and wherein said solid exit is connected to a smelter, which smelter has an exit for liquid slag and gaseous components rich in heavy metals.
